# EUROPEAN PATENT APPLICATION

(11) **EP 3 611 416 A1**
(43) Date of publication of application: **19.02.2020**
(21) Application number: 18188767.0
(22) Date of filing: 13.08.2018
(51) Int. Cl.: F16K 99/00, B01F 13/00, B01F 13/08, B01L 3/00

(54) **MICROFLUIDIC DISTRIBUTION VALVE**

(71) Applicant: CSEM Centre Suisse d'Electronique et de Microtechnique SA, 2002 Neuchâtel (CH)
(72) Inventor: SCHMID, Noa, 6010 Kriens (CH); GRAF, Siegfried F., 6010 Kriens (CH); Halvorsen, Zahra Alsadat, 8002 Zürich (CH)
(74) Representative: e-Patent SA

(57) **Abstract**

Distribution valve (1) comprising:
- a stationary element (3) comprising a first valve bearing surface (5), said stationary element (3) comprising a plurality of first fluid ports (11a) and at least one second fluid port (11c), each of said fluid ports (11a, 11c) emerging at said first valve bearing surface (5) and being in fluidic communication with a corresponding conduit (11b, 11d) provided in said stationary element (3);
- a movable element (7) comprising a second valve bearing surface (9) in contact with said first bearing surface (5), said movable element (7) being arranged to be movable with respect to said stationary element (3) and being arranged to bring at least one of said first ports (11a) into fluidic communication with said second port (11c) in function of the relative position of said movable element (7) with respect to said stationary element (3);
characterised in that:
- said stationary element (3) comprises a mixing chamber (19) in fluidic communication with one of said first fluid ports (11a).

In another embodiment, the mixing chamber (19) can be provided in the movable element (7) rather than in the stationary element (3).

## Description

### Technical Field

The present invention relates to the technical field of distribution valves. More particularly, it relates to a microfluidic distribution valves suitable for laboratory use.

### State of the art

WO2017/037072 describes a rotary microfluidic distribution valve particularly suited for use in an automated flow cytometer. This valve comprises a stator having a plurality of peripheral ports, and a central port connected to a syringe-type pump. A rotor mounted pivotally on the stator comprises at least one conduit which can be used to connect any of the peripheral ports to the central port, depending on the relative angular position between the rotor and the stator. As a result, various fluids can be drawn from the peripheral ports into the syringe-type pump, from where they can subsequently be output to another of the peripheral ports. It is also possible to draw several different fluids into the syringe-type pump, e.g. for carrying out a biological or chemical reaction.

However, when several fluids are drawn into the syringe-type pump simultaneously, it is difficult to ensure that they are well-mixed in order to carry out a biological or chemical reaction under homogeneous conditions. Better mixing would require attaching an external mixing chamber to a fluid port, which is bulky, expensive and will result in long fluid transit distances through the connecting conduits, which is particularly problematic in the case of very small samples. In such a case, long conduits lead to fluid losses and complications with cleaning and/or sterilisation.

An aim of the present invention is hence to at least partially overcome the above-mentioned drawbacks.

### Disclosure of the invention

More specifically, according to a first aspect, the invention relates to a distribution valve as defined in claim 1. This valve comprises:
- a stationary element intended to be immovably fixed on a support, this element comprising a first valve bearing surface, a plurality of first fluid ports and at least one second fluid port, each of said fluid ports emerging (i.e. opening) at said first valve bearing surface and being in fluidic communication with a corresponding conduit provided in said stationary element. These conduits may be distinct from the ports and in fluidic communication therewith, or may be formed simply by the extension of the port from its opening. Said second fluid port may e.g. be arranged to be in selective or permanent fluidic communication with a pump such as a syringe-type pump, membrane pump or similar, or may simply lead to a further conduit;
- a movable element comprising a second valve bearing surface in contact with said first bearing surface, said movable element being arranged to be movable with respect to said stationary element and being arranged to bring at least one of said first ports into fluidic communication with said second port in function of the relative position of said movable element with respect to said stationary element. This fluidic communication may be achieved e.g. by means of a connecting conduit provided in or adjacent to the second valve bearing surface. By implication, the first and second valve bearing surfaces cooperate with each other so as to be sealed one to the other with the exception of where fluidic communication with said ports is desired, in function of the relative position of the two elements. The valve bearing surfaces may be planar, or may be cylindrical or partially cylindrical.

According to the invention, the said stationary element comprises a mixing chamber in fluidic communication with one of said first fluid ports. In other words, this chamber is enclosed within the structure of the stationary element.

As a result, mixing can take place within the valve structure itself, rather than in a pump or in an external mixing chamber. The mixing can take place by creating turbulence in the chamber by operating the pump, or by means of at least one mixing element (see below). The system is thus compact, and the conduits leading to the mixing chamber are kept as short as possible. This latter aspect helps with cleaning, minimises wastage of samples, and so on, and reduces (or even eliminates) dead volume.

According to a second aspect, the distribution valve comprises:
- a stationary element comprising a first valve bearing surface, said stationary element comprising a plurality of first fluid ports and at least one second fluid port, each of said fluid ports emerging (i.e. opening) at said first valve bearing surface and being in fluidic communication with a corresponding conduit provided in said stationary element. These conduits may be distinct from the ports and in fluidic communication therewith, or may be formed simply by the extension of the port from its opening. Said at least one second fluid port may, for instance, be arranged to be in permanent or selective fluidic communication with a pump such as a syringe-type pump, membrane pump or similar, or may simply lead to a further conduit;
- a movable element comprising a second valve bearing surface in contact with said first bearing surface, said movable element being arranged to be movable with respect to said stationary element and being arranged to bring at least one of said first ports into fluidic communication with said second port in function of the relative position of said movable element with respect to said stationary element. This fluidic communication may be achieved e.g. by means of a connecting conduit provided in or adjacent to the second valve bearing surface. By implication, the first and second valve bearing surfaces cooperate with each other so as to be sealed one to the other with the exception of where fluidic communication with said ports is desired, in function of the relative position of the two elements. The valve bearing surfaces may be planar, or may be cylindrical.

According to this aspect of the invention, said movable element comprises a mixing chamber in (permanent or selective) fluidic communication with said at least one second port and arranged to be brought into fluidic communication with at least one of said first ports. In other words, the mixing chamber is formed within the structure of the movable element such that it can be made to connect the second port to at least one of the first ports. The movable element may comprise a further connecting conduit arranged to fluidically connect the second port to one of the first ports, but in its absence, such fluidic communication can simply pass through the mixing chamber.

Again, mixing can take place within the valve structure itself, rather than in a pump or in an external mixing chamber. The mixing can take place by creating turbulence in the chamber by operating the pump, or by means of at least one mixing element (see below). The system is thus compact, and the conduits leading to the mixing chamber are kept as short as possible. This latter aspect helps with cleaning, minimises wastage of samples, reduces or eliminates dead volume, and so on.

Advantageously, said mixing chamber had a cross-sectional area at least five times as large as the cross-sectional area of one of said conduits. This provides enough volume and cross-sectional area to enable sufficient mixing to take place.

Advantageously, at least one mixing element is positioned inside said mixing chamber. This mixing element can e.g. be a mechanical agitator such as a plunger-type stirrer, at least one magnetically-attractable pellet or bead (e.g. made of a ferromagnetic or ferrimagnetic material, and optionally encapsulated e.g. in a polymer such as PTFE). The use of such an active mixing element permits good mixing of even relatively viscous fluids, and/or of mixtures with a very high volume ratio difference (i.e. a large proportion of one component and a small proportion of a second component). It also permits fast mixing, and a reduction of reagent volume.

In the case in which the at least one mixing element is at least one magnetically-attractable pellet or bead, the one of the stationary element and the movable element which does not contain the mixing chamber comprising a magnet or an electromagnet arranged to magnetically couple with said at least one magnetically-attractable pellet or bead. In other words, if the mixing chamber is in the stationary element, the (electro)magnet is in the movable element, and if the mixing chamber is in the movable element, the (electro)magnet is in the stationary element. Hence, by simply moving the movable element with respect to the stationary element while the (electro)magnet is mechanically coupled with the magnetically-attractable pellet or bead, this latter can be moved within the mixing chamber and create turbulence to "stir" the fluid therein. Alternatively, one or more electromagnets may be situated adjacent to the mixing chamber, so as to be able to move the mixing element by magnetic coupling.

Advantageously, the movable element may be arranged to rotate with respect to said stationary element, or may be arranged to translate with respect thereto, along one or more translational axes.

Advantageously, a heating element may be arranged adjacent to at least one wall of said mixing chamber, so as to be able to use the mixing chamber for incubating samples while a chemical or biological reaction takes place.

Advantageously, an adaptor for attaching a plurality of hoses may be positioned on said stationary element and is arranged such that at least some of said hoses are in fluidic communication with corresponding first ports.

### Brief description of the drawings

Further details of the invention will appear more clearly upon reading the description below, in connection with the following figures which illustrate:
- Figure 1: an isometric view of a distribution valve 1 according to a first embodiment of the invention, viewed from its upper side ("upper" referring to the orientation of figure 1);
- Figure 2: an isometric view of the underside of the valve of figure 1;
- Figure 3: a partially exploded isometric view of the distribution valve of figure 1, showing the valve bearing surfaces on each component;
- Figure 4: an isometric, partially-transparent cross-sectional view parallel to the plane of the first valve bearing surface, this section passing through the ports in said surface;
- Figure 5: an isometric, partially-transparent cross-sectional view parallel to the plane of the first valve bearing surface, this section passing beneath the conduits visible in figure 4;
- Figure 6: an isometric, partially-transparent cross-sectional view perpendicular to the plane of the first valve bearing surface, this section passing through the mixing chamber and the port leading into it;
- Figures 7 and 8: isometric views from different angles of the upper side of the stationary component, the valve plates having been removed in order to expose the mixing chamber;
- Figure 9: a schematic view of an alternative mixing element;
- Figures 10 and 11: schematic views of alternative arrangements of mixing chamber and mixing element;
- Figure 12: a schematic transparent plan view of an alternative embodiment of the valve of the invention, in which the movable part is arranged to slide rather than rotate;
- Figure 13: a schematic cross-sectional view of the embodiment of figure 12, the section passing through the ports;
- Figure 14: a schematic cross-sectional view of a further embodiment of a valve according to the invention;
- Figure 15: a schematic transparent plan view of the embodiment of figure 14; and
- Figure 16 is a schematic cross-sectional view of a mixing chamber with adjacent heating element.

### Embodiments of the invention

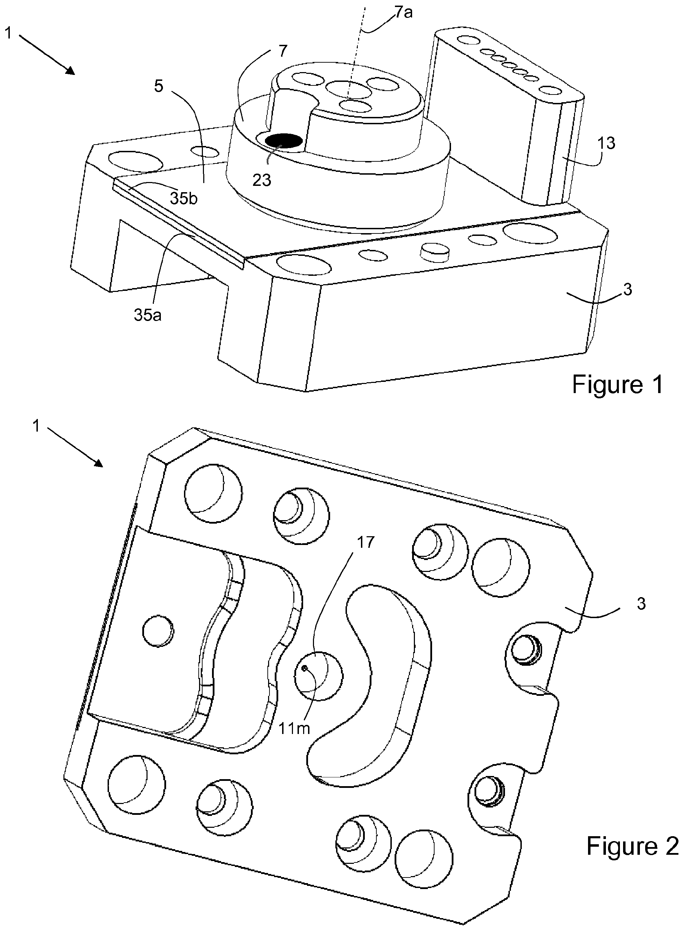

Figures 1-8 illustrate a microfluidic distribution valve 1 according to an embodiment of the invention. This microfluidic distribution valve 1 is suitable for laboratory use, e.g. for carrying out assays, chemical reactions, biological reactions, for flow cytometry and so on. The fluid in question is typically a liquid, but the system can also be used with gases, gels and so on.

The valve 1 comprises a first, stationary, element 3, intended to be attached to a support by means of bolts or similar. A plurality mounting holes, lugs or similar may be provided to this effect, if required. The stationary element 3 comprises a first valve bearing surface 5 on a first surface thereof, illustrated here as being the upper surface. A second, movable, element 7 is provided, which comprises a second valve bearing surface 9 in contact with this first valve bearing surface 5, the materials used for these surfaces being chosen and finished to such a degree that they are sealed one to the other except where required to enable fluidic communication (see below). For instance, the first valve bearing surface 5 should ideally be polished, and is ideally made from a relatively hard material such as glass, silicon, silica, ceramic, glass-ceramic, stainless steel or similar, or from a softer material with a relatively hard coating like diamond-like carbon, alumina, silica or similar. The second valve bearing surface 9 is ideally made of a softer, relatively low-friction material such as PTFE, PEEK, nylon or similar, or can be a harder material as mentioned above coated with PTFE, PEEK, nylon or similar. Or, these materials can be reversed, the harder materials forming the second valve bearing surface 9 and the softer materials forming the first valve bearing surface 5. In both cases, the first and second valve bearing surfaces 5, 9 will then seal to each other aside from where ports interface with each other, without requiring further sealing means. However, other materials are possible, and conventional seal arrangements can be used.

In the illustrated embodiment of figures 1-8, the movable element 7 is a rotor, arranged to be supported by any convenient means (not illustrated) such that it rotates about its central axis 7a under manual or automatic control. This rotation can be powered by hand, or by a motor such as a stepper motor (not illustrated), under the command of a suitable controller. However, other arrangements will be discussed below. In the illustrated embodiment, the movable element 7 is provided on an upper face of the stationary element 3, however different orientations are possible.

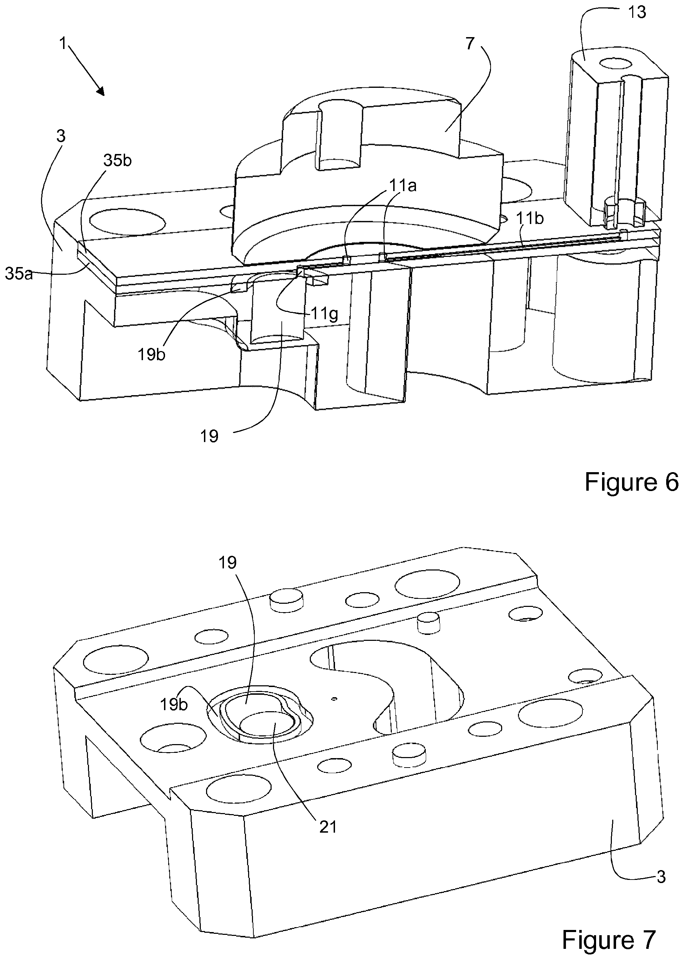

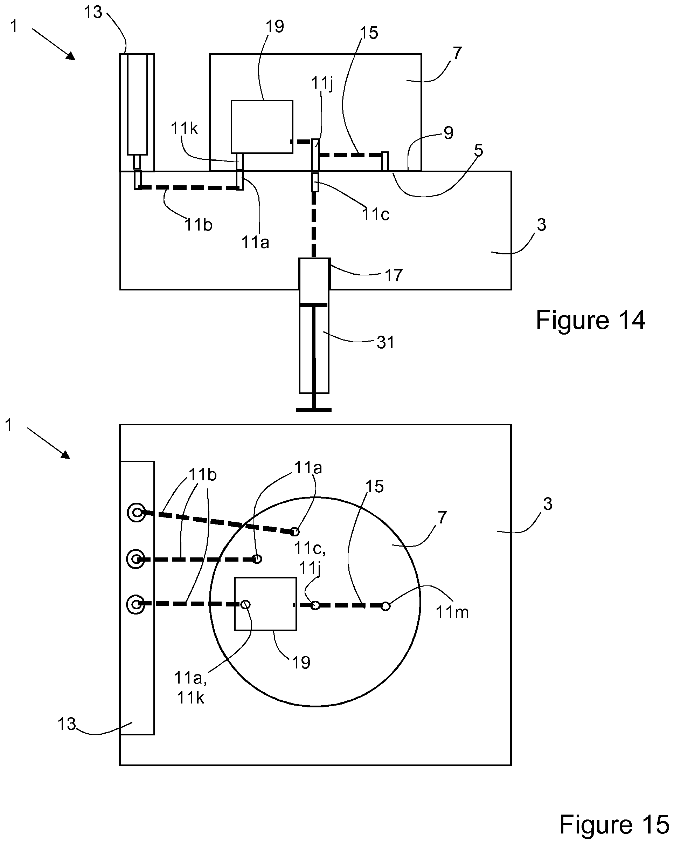

First valve bearing surface 5 comprises a plurality of fluid ports 11a, 11c which emerge at corresponding openings provided in said surface 5. These ports 11 are of two types: a first type 11a, a number of which lead to conduits 11b which are each in fluid connection with a corresponding channel of an adaptor 13 arranged to permit the attachment of hoses to the first ports 11a (see figures 6 and 14), and a second type of port 11c, which is a central, common port in the present embodiment, but can be one or more second ports 11c offset from the centre as desired and as mentioned above. The diameter of the ports is typically in the range of 50µm to 2mm, more particularly around 100-800µm, however larger or smaller ports are possible. The conduits 11b typically have a cross-sectional diameter (or width and depth) in the range of 50µm to 1mm, more particularly around 100-300µm.

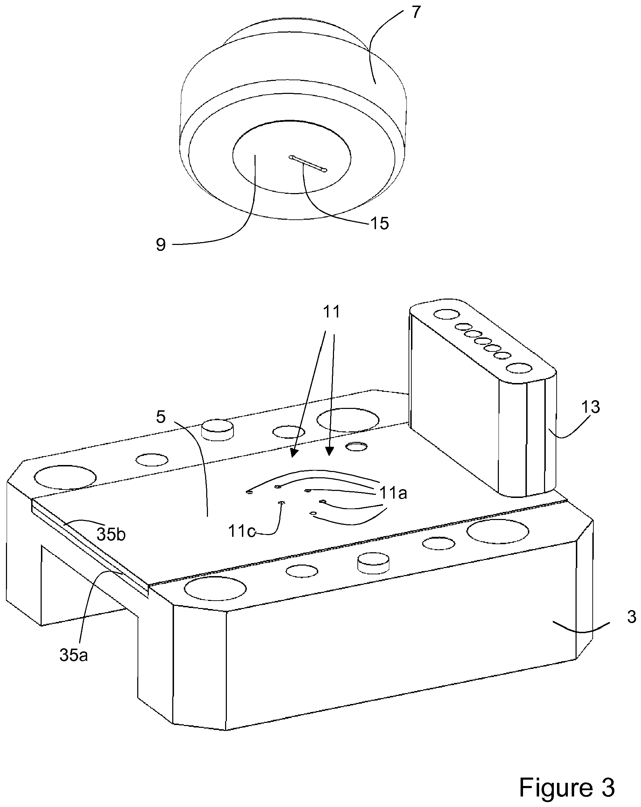

The second valve bearing surface 9 of the movable part 7 comprises a connecting conduit 15 arranged to be able to connect any of the first ports 11a to the second port 11c, depending on the position of the movable element 7 with respect to the stationary element 3. Since in the illustrated embodiment the movable element 7 is adapted to rotate about its central axis 7a with respect to the stationary element 3, the connecting conduit 15 is simply a radial groove extending from the centre of rotation with sufficient length so as to be able to interface with any of the first ports 11a (see figure 3). Alternatively, the connecting conduit 15 may be embedded in the movable element 7, emerging at the second valve bearing surface 9 at corresponding ports at its two extremities.

When the angular position of the movable element 7 with respect to the stationary element 3 causes the connecting conduit 15 to overlap a first port 11a, this latter is then fluidically connected with the second port 11c, and fluid can be drawn from that first port 11a, through the connecting conduit 15, and into the second port 11c, or vice-versa. This second port 11c itself forms a short, axial conduit 11m, which opens into an interface 17 adapted to be connected to a bi-directional pump 31 such as a syringe-type pump or any other convenient type of pump (see figure 14, in which a syringe-type pump 31 in fluidic communication with the interface is illustrated schematically, although other types of pump are possible, such as a membrane pump, a peristaltic pump, a gear pump, a vane pump, a displacement pump actuated pneumatically, or any other form of bi-directional pump). In the illustrated embodiment, this interface 17 is provided in the opposite side of the stationary element 3 to the first valve bearing surface 5, but it is also possible to provide a corresponding conduit leading from the second port 11c to emerge in any convenient position on the stationary element 3. It should also be noted that the pump 31 is not necessary, and the second port 11c may just open into a further conduit leading to the adaptor 13 or elsewhere. Also, as mentioned above, further second ports 11c can be provided, e.g. arranged at one or more radii and at various angular positions considered from the axis of rotation 7a, one or more connecting conduits 15 being arranged as required to connect one or more second ports 11c to one or more first ports 11a depending on the position of the movable element 7 with respect to the stationary element 3. In such a case, typically none of the second ports 11c would be situated on the axis of rotation 7a, but it is not excluded that one such second port 11c might be positioned there. These variations apply equally to all of the embodiments of the invention, mutatis mutandis.

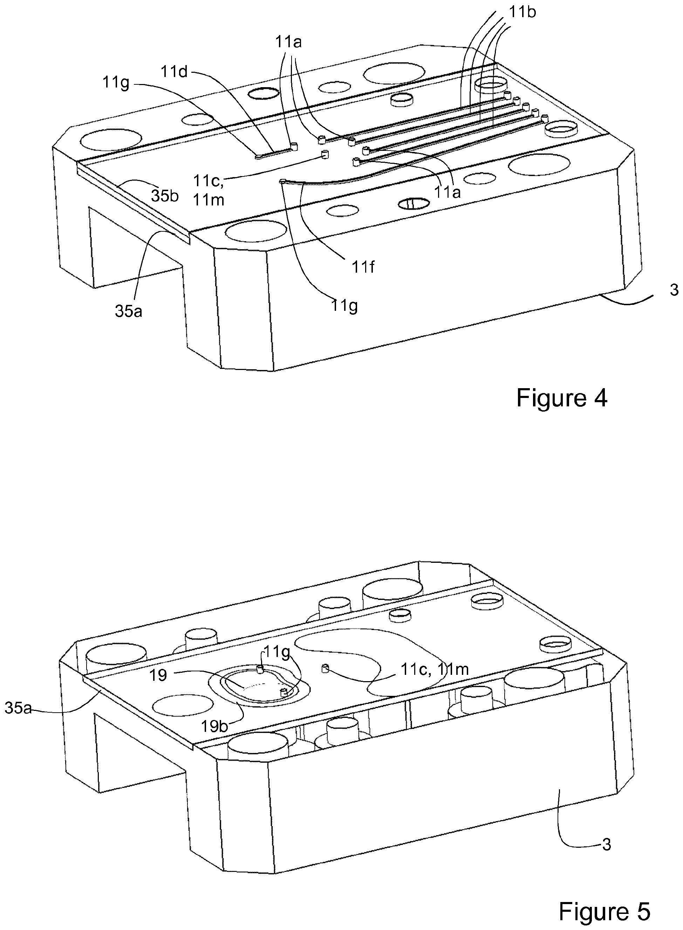

According to this embodiment of the invention, at least one of the first ports 11a is connected to the corresponding channel of the adaptor 13 via a mixing chamber 19, visible in figures 5 and 6.

Mixing chamber 19 is formed as a cavity in the stationary element 3, and is in fluidic communication with one of the first ports 11a via a first conduit 11d, and with the adaptor 13 by means of a further conduit 11f. Each of these conduits 11d, 11f emerges proximate to a respective, opposite, end of the mixing chamber 19 via a corresponding port 11g, which does not emerge at the first valve bearing surface 5 but simply causes the corresponding conduit 11d, 11f to open into the mixing chamber 19. Mixing chamber 19 has a cross-sectional area at least five times, preferably at least 10 times, as great as the conduit 11d leading to it, considered in any of its median planes and compared with the lateral cross-sectional area of the conduit 11d. Mixing chamber 19 typically has a volume of between 0.01 mL and 1mL, preferably between 0.05mL and 0.5mL. Ideally, the mixing chamber 19 is contained entirely within the footprint of the movable element 7, i.e. is entirely overlapped by this latter. In other words, if one were to define a locus extending the outer peripheral wall of the movable element 7 through the thickness of the stationary element 3, the mixing chamber is ideally contained within this locus, which is particularly compact. However, it is also possible that the mixing chamber 19 is only partially within this locus (e.g. 25%-75% of its volume within the locus), or is entirely outside of it but still inside the volume defined by the stationary element 3. This is distinct from the mixing chamber being situated in a separate element and connected to a first port 11a by a further conduit.

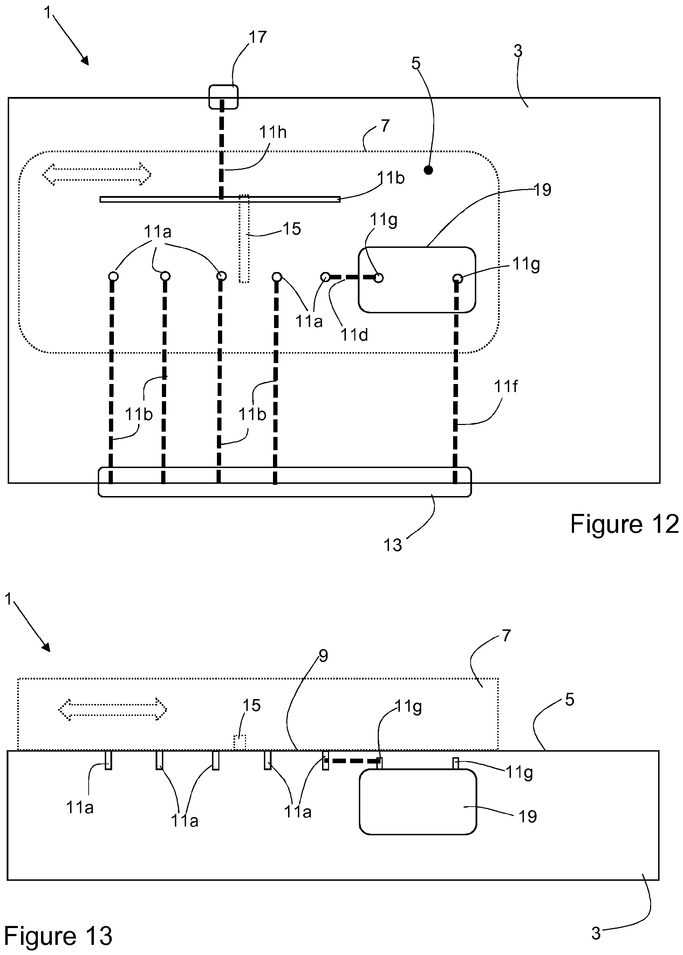

It should further be noted that, rather than having a conduit 11d fluidically connecting one of the first ports 11a to the mixing chamber 19, said first port 11a can open directly into the chamber 19, which applies equally to the embodiment of figures 12-13 below. In such a case, said first port 11a itself forms the conduit leading from the opening of the port in the first valve bearing surface 5 into the mixing chamber 19.

By pivoting the movable element 7 so as to align its connecting conduit 15 with a particular first port 11a, fluid can be drawn into a pump connected to the interface 17 from an external source fluidically connected to the corresponding channel in the adaptor 13. The movable element 7 can then be rotated so as to align its connecting conduit 15 with the first port 11a leading to the mixing chamber 19, and the fluid can then be injected into the mixing chamber 19. In other words, depending on the relative angular position of the movable element 7 with respect to the stationary element 3, a first port 11a can be selected and brought into fluidic communication with the second port 11b.

By working the pump in both directions, turbulence can be created in the mixing chamber 19, thereby mixing the fluid therein. Several different fluids from different first ports 11a can be injected sequentially into the mixing chamber 9, and then mixed by generating turbulence as described above. Alternatively, several different fluids from different first ports 11a can be aspirated sequentially into the pump 31 and then injected into the mixing chamber 19 in one operation after placing the movable element 7 in the correct orientation with respect to the stationary element 3 so as to cause the second port 11c to communicate fluidically with the mixing chamber 19.

In order to avoid having to operate the pump backwards and forwards to mix the fluid in the chamber 19, one or more mixing elements 21 can be provided therein. As illustrated, this mixing element is a single magnetically-attractable pellet fitted loosely into the chamber 19, but multiple, smaller pellets or beads are also possible. The magnetically-attractable pellet may for instance be steel or another ferromagnetic metal, a ferrimagnetic ceramic, or other magnetically-attractable material. The pellet may be encapsulated in an inert substance such as glass, a ceramic, or a polymer such as PTFE. In the illustrated embodiment, the pellet is cylindrical, with its longitudinal axis parallel to the axis 7a of the movable element 7 (see figure 1), but other shapes such as spheres, polyhedral, or irregular forms are also possible.

A magnet 23 (see figure 1) provided in the movable element 7 permits manipulation of the mixing element 21 in the chamber 19. Since the mixing element 21 is loosely fitted in the chamber 19 with play between itself and the wall of the chamber 19, when the mixing element 21 is moved back and forth turbulence is created in the fluid contained therein, which causes mixing to take place. Ideally, when the magnet 23 overlaps the mixing chamber 19, none of the first ports 11a are in fluidic communication with the connecting conduit 15, to prevent undesired transfer of small quantities of fluid from one port to another. Alternatively, the magnet 23 may be placed in a separate element on the opposite side of the stationary element 3 to the movable element 7, or on a sidewall thereof, in sufficient proximity to magnetically-couple with the pellet 21. Further alternatively, multiple electromagnets could be placed at different locations adjacent to the mixing chamber 19, such as adjacent to the two ends thereof, sequential activation of these electromagnets causing the mixing element 21 to move back and forth. Alternatively, the pellet 21 could be electrostatically-attractable, and a pair of electrical conductors (e.g. conducting plates) could be arranged adjacent to the mixing chamber 19 on opposite sides thereof, such that an application of a suitable varying voltage to said conductors causes the pellet 21 to move by electrostatic attraction / repulsion.

As illustrated, the chamber 19 extends along an arc of a circle centred on the axis 7a, but it can also extend along a straight line, can be cylindrical, have a square or rectangular cross-section in the plane of the stationary element 3, or have any other convenient shape.

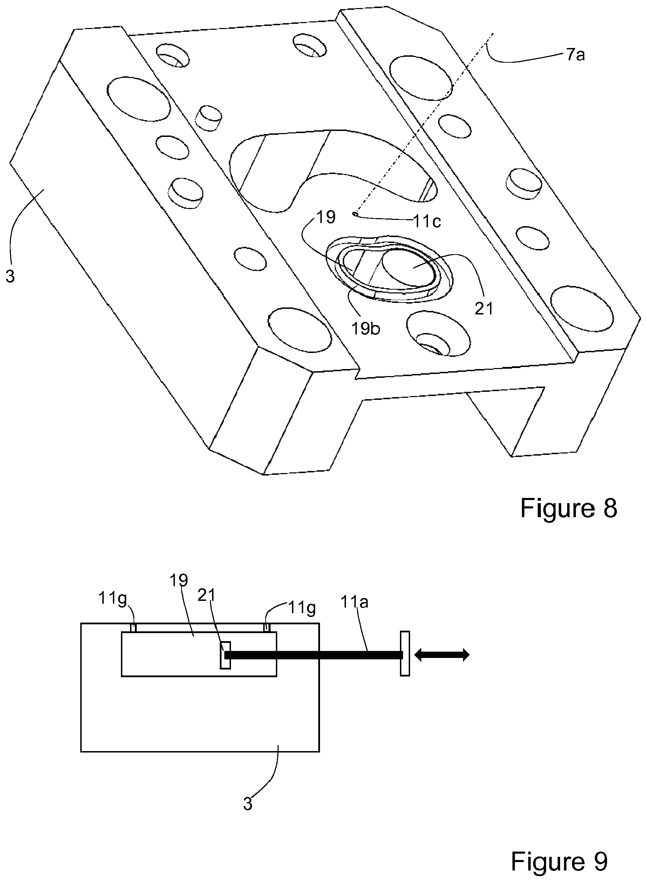

Alternatively, the mixing element 21 may be mechanically actuated, e.g. a plunger-type agitator arrangement passing through a sidewall or the underside of the stationary element 3, as illustrated in figure 9. In such a case, sufficient sealing between the stem 21a of the plunger and the stationary element 3 should be provided, e.g. by suitable choices of materials and surface finishes, or by the provision of suitable seals (e.g. sealing rings) between the stem 21a and the walls of the passageway in which it is fitted. The head of the plunger is sized and shaped so as to permit fluid to pass through and/or around the head as it is moved back and forth, and to this end the head of the plunger may comprise fluid passageways through its thickness, being made e.g. from gauze, a perforated sheet or similar.

In each case, the mixing element 21 has several advantages. It improves the speed of mixing, permits a reduction of reagent volume, permits mixing liquids with several components in which one component is present in a very small proportion with respect to the other (e.g. one component being <10%, <5% or even <1% by volume of the total liquid present), and permits mixing of even relatively viscous liquids.

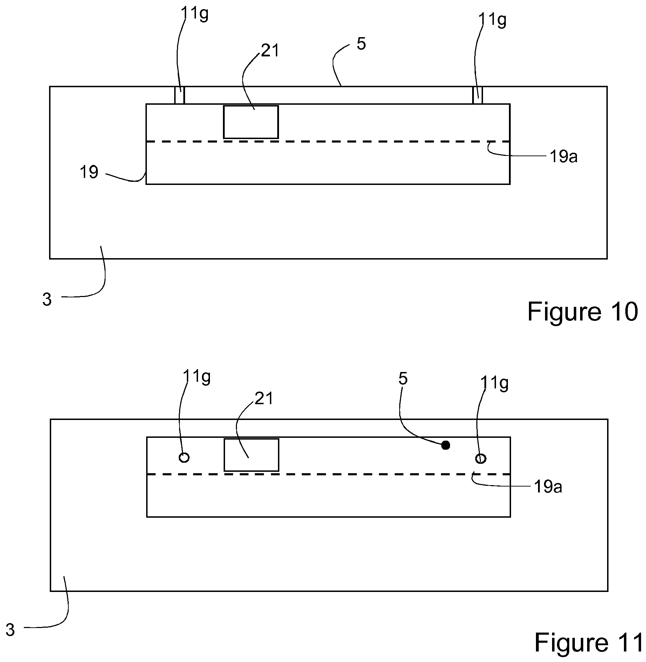

Figure 10 illustrates a further variant, in side view, in which the mixing chamber 19 is divided into two by a permeable wall 19a substantially parallel to the plane of the first valve surface 5, which may e.g. be a gauze, a sieve-like structure (i.e. a wall comprising a plurality of holes in a regular or irregular pattern), a membrane comprising microchannels or similar. The mixing element 21 is illustrated as being situated in the chamber 19 on the side of the wall 19a facing the ports 11g, however it may also be on the side facing away from said ports. Figure 11 illustrates, in plan view, a further arrangement in which the wall 19a is substantially perpendicular to the plane of the first valve surface 5, the ports 11g emerge on a first side thereof, and the mixing element 21 is situated on the same side of the wall 19a as the ports 11g. Alternatively, the mixing element 21 may be on the opposite side of the wall to the ports 11g.

In all of these variations, the permeable wall 19a serves to improve turbulence in the fluid in the chamber 19, and thereby to improve mixing and the homogeneity of the fluid once mixed.

Figures 12 and 13 illustrate schematically a further variant of a valve 1 according to the invention, respectively in transparent plan view and in cross-section along the line of ports 11a, 11g. In figure 12, the movable element 7 and its features are illustrated with dotted lines in order to distinguish them from the stationary element 3 (solid lines) and the conduits 11b, 11d, 11f (dashed lines) which are embedded in the body of the stationary element 3.

In this variant, the movable element 7 is arranged to slide along a longitudinal axis with respect to the stationary element 3, and to this end the first ports 11a are arranged in a straight line extending parallel to this longitudinal axis. The second port 11b is formed as a slot also extending along a direction parallel to this longitudinal axis of displacement, and the connecting port 15 provided in the movable element 7 is arranged to be able to bring any of the first ports 11a in fluidic connection with the second port 11b. Again, one of the first ports 11a leads to a mixing chamber 19, which may be of any of the forms discussed above. Again, a mixing element 21 may be provided therein (not illustrated in figures 12 and 13), which may be of any type disclosed above. Also, a magnet may be provided in the movable element 7 as before, such that sliding the movable element 7 along its axis of motion while the magnet is magnetically coupled with the mixing element 21 will assist in mixing the fluid in the chamber 19. The conduits 11b, 11f extend laterally, and interface with an adaptor 13 provided on a sidewall of the stationary element 3, however an arrangement similar to that of figures 1-8 is also possible. Furthermore, the interface 17 for a pump is also arranged on a sidewall of the stationary element 3, and is fluidically connected with the second port 11b by a further conduit 11h. Ideally, the movable element 7 should be sized such that none of the first or second ports 11a, 11b are opened to the air when the movable element is in one of its extreme positions.

The other features of the valve 1 are as before, and need not be described further.

Figures 14 and 15 illustrate yet another embodiment of the invention, conduits buried in the material of an element again being represented by thick dashed lines. In this embodiment, which is similar to that of figure 1, the mixing chamber 19 is provided in the movable element 7 rather than in the stationary element 3. As illustrated, the chamber 19 is connected to a central port 11j of the movable element 7, which is in permanent fluidic communication with the second port 11c of the stationary element 3. Towards its side remote from the central port 11j, the chamber is in fluidic communication with a further port 11k positioned so as to be able to be brought into fluidic communication with one of the first ports 11a according to the relative angular position of the movable element 7 with respect to the stationary element 3. Further port 11k may open directly into the mixing chamber 19 (itself hence forming a conduit), or may be fluidically connected thereto by means of a further conduit.

Furthermore, a conventional connecting conduit 15 is provided as in figure 1, extending from the central port 11j to a further port 11m, again positioned so as to be able to be brought into fluidic communication with one of the first ports 11a. As illustrated, this connecting conduit extends in an opposite radial direction to the chamber 19 (although other directions are possible), and the first ports 11a are positioned such that it is not possible that both of the further ports 11k, 11m overlap different first ports 11a at the same time. This prevents undesired fluid flows between ports. However, it should be noted that the connecting conduit 15 is not required in this embodiment, and if it is omitted, all fluid communication between the second port 11c and one of the first ports 11a is carried out via the mixing chamber 19.

As before, the chamber 19 may contain a mixing element 21 of any convenient type (not illustrated in figures 14 and 15), and in the case of a magnetically-manipulatable mixing element 21, a magnet may be provided at a convenient location in the stationary element 3.

The same principle of locating the mixing chamber 19 in the movable element 7 can also be applied to the embodiment of figures 12 and 13.

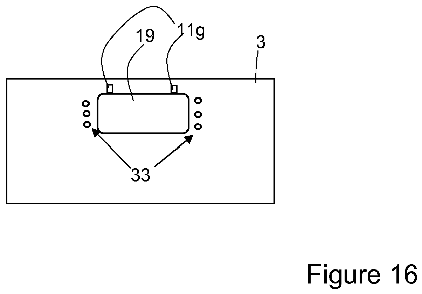

Figure 16 illustrates schematically an arrangement in which a heating element 33 such as an electric heating element, a conduit for warm water or similar, is provided adjacent to at least one wall of the mixing chamber 19. This enables the chamber 19 to be heated and therefore be used as an incubation chamber or to carry out reactions at higher than ambient temperatures. Although this has been illustrated in the context of a chamber 19 provided in the stationary element 3, it is equally applicable to a chamber provided in the movable element 7 as in figures 14 and 15.

In terms of the construction of the stationary element 3, this can be produced as a unitary, monolithic part, e.g. by additive manufacturing (3D printing, stereolithography, or similar), thereby incorporating all cavities, conduits and ports into a single, unitary construction. Suitable materials are polymers such as acrylic (PMMA), nylon, epoxy, PEEK but also ceramics, glasses, glass-ceramics, stainless steel and so on, and surfaces may be post-machined and coated with a layer of another substance such as PTFE, Parylene or DLC (diamond-like carbon).

However, the embodiment as illustrated in figures 1-8 has been designed with multi-part manufacturing in mind, in order to simplify manufacture by conventional methods. As can particularly be seen in figures 7 and 8, the main body of the stationary element 3 is provided with the mixing chamber 19 and with part of the conduit leading from the second port 11c to the interface 17. A first plate 35a is situated on the upper surface of the main body of the stationary element 3, and closes the mixing chamber 19. A groove 19b may be provided in the upper surface of said main body, and may contain a sealing ring, as is generally known, in order to guarantee the sealing of the periphery of the mixing chamber 19. However, if the first plate is e.g. laser welded or glued around the upper face of the mixing chamber 19, this joint can be omitted. First plate 35a comprises openings for the ports 11g and 11c. Ports 11g, 11c can be formed e.g. by conventional drilling, by laser ablation or similar.

A second plate 35b is provided upon the first plate 35a, this second plate 35b comprising first ports 11a and the corresponding conduits 11b, 11d, 11f, together with a through-hole for second port 11c. Second plate 35b hence comprises the first valve surface 5. Since the conduits 11b, 11d, 11f extend parallel to the surface of the plate, they can be formed e.g. by irradiation of a transparent material such as a suitable glass by the intersection of two or more lasers, followed by chemical etching of the irradiated channel. This technique is known as laser-induced deep etching (LIDE) or laser-assisted etching, and typically uses a femtosecond laser. Alternatively, the conduits 11b, 11d, 11f can be formed in situ in the case in which the plate is formed by additive manufacturing (3D printing, such as SLM, SLS, stereolithography or similar). Or, the second plate 35b can be formed by two sub-plates in which half of each conduit is machined, etched or laser-ablated as a groove, with the conduit being formed once the two sub-plates are unified by friction welding, laser welding, gluing or similar. The same principle can be applied to a single groove in one plate, the other plate having a flat surface facing the groove. This flat plate could alternatively, for instance, be formed as an adhesive tape bonded to the grooved plate. Both of the first and second plates 35a, 35b are fixed together and to the main body of the stationary element 3, e.g. by gluing, laser welding, friction welding, clamping or similar. The two plates 35a, 35b are constructed such that they are sealed one to the other aside from where fluid pathways are intentionally provided.

Although the invention has been described with reference to specific embodiments, variations thereto are foreseeable without departing from the scope of the invention as defined in the appended claims.

For instance, the valve bearing surfaces 5, 9 do not have to be planar, and can be cylindrical or shaped as a partial cylinder. In such a case, the first ports 11a are distributed circumferentially, and the second port 11b can be arranged as required, e.g. extending parallel to, or even along, the axis of said cylinder. Furthermore, it is also possible to provide multiple mixing chambers 19 in any given distribution valve 1, for instance for dilution purposes or for carrying out multiple different reactions in different chambers simultaneously.

## Claims

1. Distribution valve (1) comprising:
- a stationary element (3) comprising a first valve bearing surface (5), said stationary element (3) comprising a plurality of first fluid ports (11a) and at least one second fluid port (11c), each of said fluid ports (11a, 11c) emerging at said first valve bearing surface (5) and being in fluidic communication with a corresponding conduit (11b, 11d, 11m) provided in said stationary element (3);
- a movable element (7) comprising a second valve bearing surface (9) in contact with said first bearing surface (5), said movable element (7) being arranged to be movable with respect to said stationary element (3) and being arranged to bring at least one of said first ports (11a) into fluidic communication with said second port (11c) in function of the relative position of said movable element (7) with respect to said stationary element (3);
**characterised in that**:
- said stationary element (3) comprises a mixing chamber (19) in fluidic communication with one of said first fluid ports (11a).

2. Distribution valve (1) comprising:
- a stationary element (3) comprising a first valve bearing surface (5), said stationary element (3) comprising a plurality of first fluid ports (11a) and at least one second fluid port (11c), each of said fluid ports (11a, 11c) emerging at said first valve bearing surface (5) and being in fluidic communication with a corresponding conduit (11b, 11d, 11m) provided in said stationary element (3);
- a movable element (7) comprising a second valve bearing surface (9) in contact with said first bearing surface (5), said movable element (7) being arranged to be movable with respect to said stationary element (3) and being arranged to bring at least one of said first ports (11a) into fluidic communication with said second port (11c) in function of the relative position of said movable element (7) with respect to said stationary element (3);
**characterised in that**:
- said movable element (7) comprises a mixing chamber (19) in fluidic communication with said second port (11c) and arranged to be brought into fluidic communication with at least one of said first ports (11a).

3. Distribution valve (1) according to any preceding claim, wherein said mixing chamber (19) had a cross-sectional area at least five times as large as the cross-sectional area of one of said conduits (11b, 11d, 11m).

4. Distribution valve (1) according to any preceding claim, wherein at least one mixing element (21) is positioned inside said mixing chamber.

5. Distribution valve (1) according to the preceding claim, wherein said mixing element (21) is at least one of:
- a mechanical agitator;
- a magnetically-attractable element, pellet or bead.
- an electrostatically-attractable element, pellet or bead.

6. Distribution valve (1) according to any preceding claim, wherein said mixing element (21) is at least one magnetically-attractable pellet or bead, the one of the stationary element (3) and the movable element (7) which does not contain the mixing chamber (19) comprising a magnet (23) or an electromagnet arranged to magnetically couple with said at least one magnetically-attractable pellet or bead.

7. Distribution valve (1) according to any preceding claim, wherein said movable element (7) is arranged to rotate with respect to said stationary element (3).

8. Distribution valve (1) according to one of claims 1-6, wherein said movable element (7) is arranged to translate with respect to said stationary element (3).

9. Distribution valve (1) according to any preceding claim, wherein a heating element (33) is arranged adjacent to at least one wall of said mixing chamber (19).

10. Distribution valve (1) according to any preceding claim, wherein an adaptor (13) for attaching a plurality of hoses is positioned on said stationary element (3) and is arranged such that at least some of said hoses are in fluidic communication with corresponding first ports (11a).

11. Distribution valve (1) according to any preceding claim, wherein each of said first and second valve surfaces (5, 9) is planar, cylindrical, or partially cylindrical.
